# EUROPEAN PATENT APPLICATION

(11) **EP 1 471 518 A2**
(43) Date of publication of application: **27.10.2004**
(21) Application number: 04009386.6
(22) Date of filing: 21.04.2004
(51) Int. Cl.: G11B 17/03, G11B 23/03

(54) **Tray and recording / reproducing apparatus**

(30) Priority: 23.04.2003 JP 2003118248
(71) Applicant: MATSUSHITA ELECTRIC INDUSTRIAL CO., LTD., Kadoma-shi, Osaka 571-8501 (JP)
(72) Inventor: Naoki, Goro, Higashiosaka-shi Osaka 578-0947 (JP); Saji, Yoshito, Ashiya-shi Hyogo 659-0043 (JP); Ezawa, Kozo, Hirakata-shi Osaka 573-0049 (JP); Inata, Masahiro, Itami-shi Hyogo 664-0001 (JP)
(74) Representative: Eisenführ, Speiser & Partner

(57) **Abstract**

A tray for mounting a cartridge incorporating a flat information recording medium includes sliders (2,6) sliding in a loading direction of the cartridge on a tray base in cooperation with the mounting action of the cartridge, and a slider moving mechanism for moving the slider between an initial position, and a plurality of stopping positions remote from the initial position by specific distances in the loading direction. The plurality of stopping positions are at least in two stopping positions, that is, a first stopping position remote from the initial position by a first distance in the loading direction, and a second stopping position remote from the initial position by a second distance longer than the first distance in the loading direction. Thereby, if a cartridge is mounted on a tray in a wrong direction, the user can easily recognize its wrong mounting.

## Description

### BACKGROUND OF THE INVENTION

### 1. Field of the Invention

The present invention relates to a tray for mounting a cartridge containing an information recording medium for video, music, computer data or the like, and a recording/reproducing apparatus having such a tray.

### 2. Description of the Related Art

The digital trend is progressively recently in the field of information recording/reproducing field, and information recording media are rapidly extending applications from the conventional digital audio recording use to digital moving picture and audio recording use. Accordingly, there is an increasing demand for larger recording capacity of information recording media and establishment of a recording/reproducing technology capable of recording and/or reproducing stably at high speed.

In the midst of such increasing demand, a particular attention is focused on a so-called recordable DVD (Digital Versatile Disk) as a disk type information recording medium of large capacity capable of recording/reproducing information signals digitally.

The recordable DVD is composed by interposing an information layer capable of recording/reproducing information signals between base materials of about 0.6 mm in thickness, and gluing them together. Types of the recordable DVD include a DVD-R disk known as write-once recording type, and a DVD-RAM disk or a DVD-RW disk of rewritable type. In the former type, a phase changing material is used in the information layer for recording/reproducing information signals, and in the latter type, on the other hand, a pigment material is used in the information layer.

These recordable DVDs are designed to record/reproduce information optically, and are hence vulnerable to effects of dust and dirt, and if dust or fingerprint deposits on the surface, stable recording/reproducing may be disabled. In any recordable DVD, the cartridge for containing the DVD is specified by the standard.

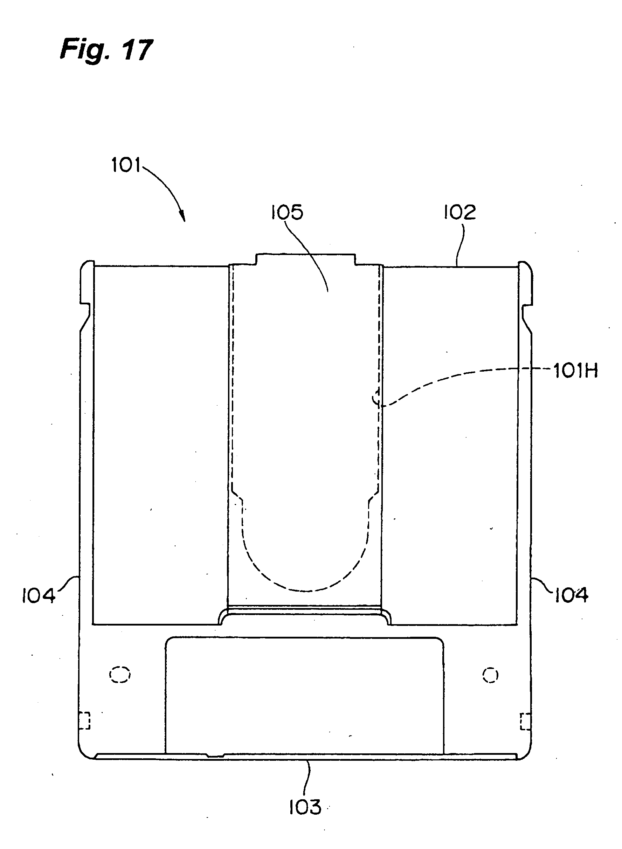

Fig. 17 is an explanatory plan view schematically showing the cartridge for containing a recordable DVD. As shown in the drawing, the shape of a cartridge 101 specified by the recordable DVD standard is set in a rectangular shape in an outer shape (hereinafter, referred to as "cartridge outer shape" or "outer shape" simply) of a principal plane substantially parallel to a disk (not shown) contained in its inside. That is, the cartridge 101 is set in a substantially rectangular shape in a plan view.

On the principal plane of one side of the cartridge 101, there is an opening 101H (or "window") in a specified width extending from the edge of one shorter side 102 to other shorter side 103, and this window 101H is opened/closed by a slide shutter 105. Part of the disk is exposed from the window 101H, and a turntable for rotatably supporting the disk and an optical pickup can be accessed from this window 101H.

The window 101H is closed by the slide shutter 105 while the cartridge 101 is not mounted on the recording/reproducing apparatus and, after the cartridge 101 is mounted on the recording/reproducing apparatus, the slide shutter 105 slides along the principal plane, and it is opened.

The recording/reproducing apparatus applicable to this cartridge 101 includes a tray (cartridge tray) for mounting the cartridge 101 and, in many cases, this tray is arranged to be drawn into and discharged from the main body of the recording/reproducing apparatus. And, the recording/reproducing apparatus is provided with a shutter opener for driving the slide shutter 105 of the cartridge 101 and opening the window 101H, in cooperation with the action of the tray being drawn into the recording/reproducing apparatus main body.

Therefore, in order to expose part of the disk from the window 101H of the cartridge 101 and record/reproduce in the disk, the cartridge 101 must be mounted on the tray by positioning appropriately so that the slide shutter 105 of the cartridge 101 may be positioned closer to the main body inside of the recording/reproducing apparatus when mounting the cartridge 101 on the tray.

That is, the tray is specified in the mounting direction of the cartridge 101 and, if the cartridge 101 is mounted on the tray in a wrong direction, the disk contained in the cartridge 101 cannot be recorded or reproduced by the recording/reproducing apparatus.

An example of mechanism for preventing wrong mounting of the cartridge is disclosed in Japanese Patent Laid-open Publication No. 10-40630. The disk driving device of this publication is provided with a holder for holding a case (cartridge) inserted from outside, and a loading base having a reference pin positioned at the lower side of the holder for positioning the case held by the holder in a specified recording/reproducing position. At the lower end of both sides of the holder, folded parts folded inside are formed face to face. The case inserted in the holder is specified in the lower limit position by the folded parts in the thickness direction, while the upper limit position is specified by a guide convex portion formed on the top of the holder. A detection lever is disposed in the folded parts of the holder, and wrong insertion of the case is detected by the action of this detection lever, and the detection lever further functions to play a role of stopper to prevent wrong insertion of the case.

As explained above, a conventional cartridge such as the cartridge for recordable DVD has a rectangular outer shape in a plan view, and therefore if mounted in a wrong direction 90° different from the specified mounting direction, that is, the longer side 104 being opposite to the main body of the recording/reproducing apparatus (that is, sideways), the mounted cartridge 101 is out of the tray. Therefore, the user easily recognizes wrong mounting. Even if the user is not aware of wrong mounting of the cartridge 101 in lateral direction, when mounted in the lateral direction, the protruding portion of the cartridge from the tray interferes with the tray inlet of the recording/reproducing apparatus, and at this moment the user securely recognizes wrong mounting.

In addition, if mounted in a wrong direction 180° different from the specified mounting direction, that is, the shorter side 103 opposite to the shorter side 102 having the shutter 105 being opposite to the main body entrance of the recording/reproducing apparatus (that is, reversely in longitudinal direction), for example, as disclosed in the above publication, the reference pin provided in the tray is not engaged with the recess of the cartridge, so that wrong mounting can be detected.

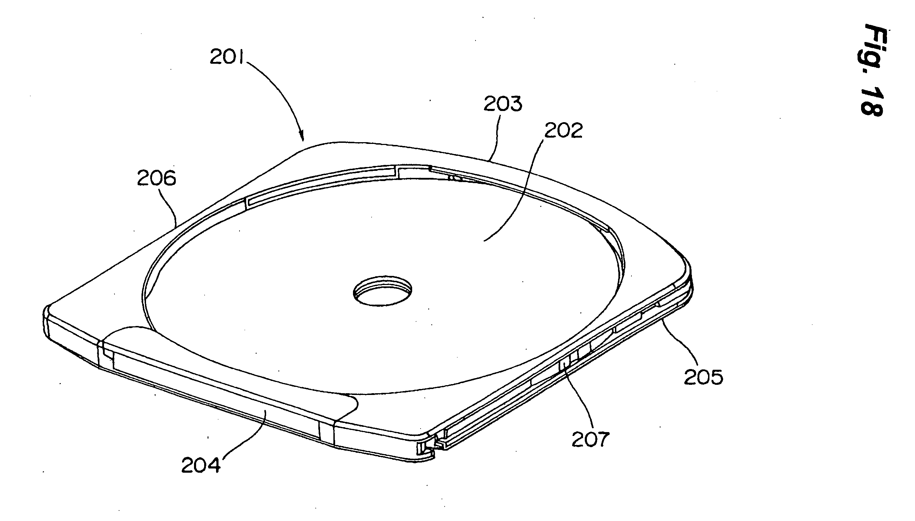

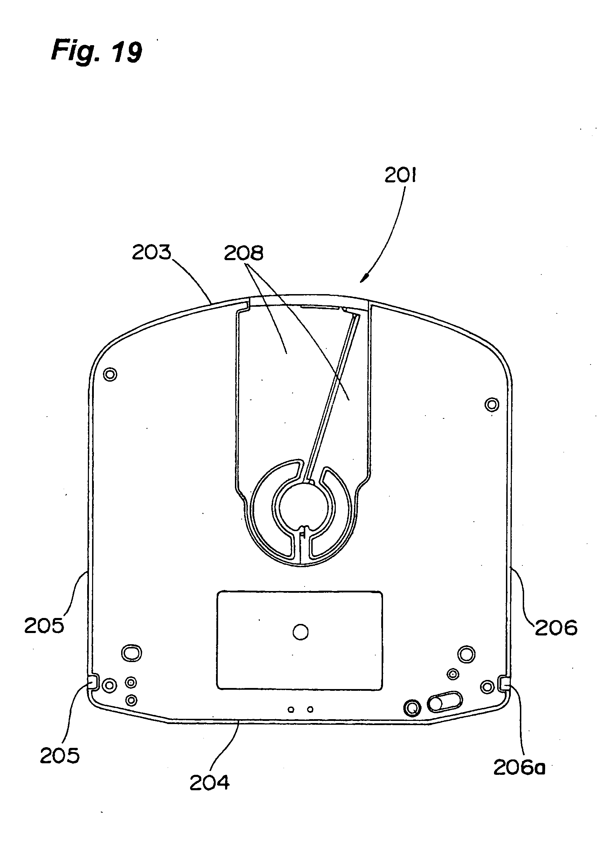

Recently, on the other hand, a cartridge of an almost square outer shape in plan view is also proposed. For example, in a so-called blue-ray disk (BD) information recording medium dramatically enhanced in the recording density by using blue laser of shorter wavelength than red laser generally applied in recording/reproduction of recordable DVD, as shown in Fig. 18, the outer shape of a cartridge 201 is basically square. In this particular square shape, one side is curved outside like an arch, both corners at the ends of opposing side opposites to the arch side are chamfered, and the arch side is used oppositely to the main body entrance side to the recording/reproducing apparatus (this is the front side, the arch side is a front edge 203, and the wall spreading in the thickness direction of the cartridge at the front side is called a front wall 203). Also in the case of this BD cartridge 201, there are a shutter 208 and a shutter opening 207 (see Fig. 18) for opening/closing by turning the shutter 208 as shown in Fig. 19.

The cartridge 201 has a pair of lateral sides 205 and 206 for coupling the front edge 203 and opposite side of the front edge 203 (this is a rear edge 204, the rear edge 204 side is the rear side, and the wall spreading in the thickness direction of the cartridge at the rear side is a rear wall 204 (hereinafter the walls spreading in the thickness direction of these lateral sides are called side walls 205 and 206).

The shutter 208 opens/closes a window (not shown) formed by cutting off part of the front wall 203 and part of the reverse face of the cartridge 201, and the shutter opening 207 is provided in either one of the side walls 205 and 206 (side wall 205 in the example in Fig. 18).

As shown in Fig. 20, this shutter opening 207 is guided by a lateral wall 210 of a tray 212, and is engaged with a shutter opener 211 provided in the lateral wall 210. By this shutter opener 211, the shutter 208 is driven between a shutter closed state as shown in Fig. 21 and an open state as shown in Fig. 22. When the shutter 208 is opened, as shown in Fig. 23, part of an information recording medium 202 (BD 202) is exposed from an opening (window) 209, so that it can be recorded/reproduced.

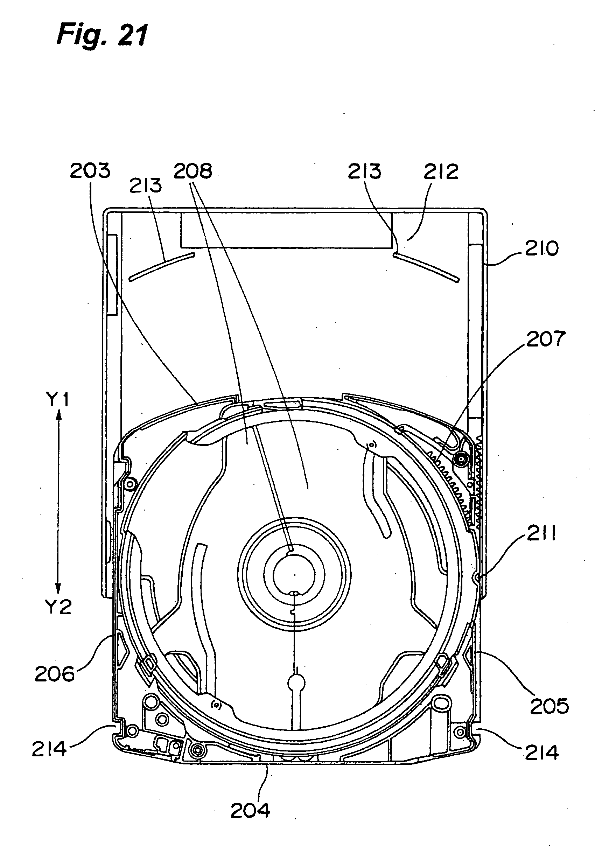

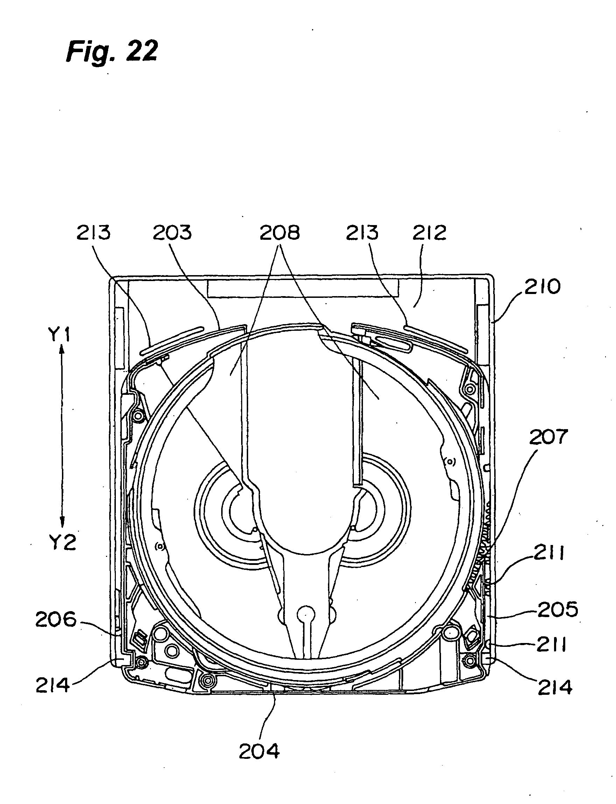

Figs. 21 and 22 are plan views showing the engagement relation of the lower half of the BD cartridge 201 and tray 201 for the ease of understanding of open/close state of the shutter 208.

As shown in Fig. 21, the tray 212 for mounting the BD cartridge 201 has a cartridge partition 213 for defining the outer shape of the BD cartridge 201, and since the outer shape of the BD cartridge 201 is basically square, when mounting on the tray 212, if the BD cartridge 201 is mounted reversely in the longitudinal direction 180° deviated from the specified mounting direction toward the inserting direction (loading direction, see arrow Y1) into the apparatus main body of the tray 212, or mounted sideways deviated by ±90° from the specified mounting direction, at a glance, the BD cartridge 201 appears erroneously to be mounted normally on the tray 212. If mounted in wrong direction in such manner, the shutter opening 207 of the BD cartridge 201 does not function, and the recording/reproducing apparatus cannot operate to record or reproduce. If the cartridge 201 is once carried into the apparatus main body in such wrong mounting state, this cartridge 201 may not be discharged from the apparatus main body.

### SUMMARY OF THE INVENTION

The invention is devised in the light of the above conventional technical problems, and it is hence an object thereof to allow the user to recognize wrong mounting easily if a cartridge is mounted on a tray in a wrong direction.

To achieve the object, the tray according to the invention includes a shder moving in a loading direction of the cartridge on the tray base in cooperation with the mounting action of the cartridge on the tray base; and a shder moving mechanism for moving the slider between an initial position where the cartridge is not mounted, and a plurality of stopping positions remote from the initial position by specific distances in the loading direction, wherein the plurality of stopping positions include at least two stopping positions, that is, a first stopping position remote from the initial position by a first distance in the loading direction, and a second stopping position remote from the initial position by a second distance longer than the first distance in the loading direction.

In this constitution, when mounting the cartridge on the tray, it is known whether the mounting direction of the cartridge is specified direction or wrong direction by difference in moving distance of the slider, so that the user can easily recognize the wrong mounting if the cartridge is mounted in a wrong direction.

In the tray of the invention, preferably, the plurality of stopping positions further include a third stopping position remote from the initial position by a third distance longer than the second distance in the loading direction.

In this case, a cartridge of which the slider moving distance is different (longer) when mounting the cartridge on the tray in specified mounting direction, that is, a cartridge of other type different in shape can be mounted.

Preferably, the tray of the invention further comprises slider biasing mechanism for returning the slider from any one of the plurality of stopping position to the initial position.

By such slider biasing mechanism, the slider can be returned to the initial position automatically when the cartridge is taken out of the tray.

In the tray of the invention, preferably, the slider includes a selector for selecting the stopping position of the slider stopping by moving in the loading direction from the plurality of stopping positions.

By such selector, when mounting the cartridge on the tray, the slider stopping position (that is, the slider moving distance) is selected by the selector, and wrong mounting of the cartridge can be detected.

Preferably, the tray of the invention further comprises slider biasing mechanism for returning the selector to an initial state when the slider returns from any one of the plurality of stopping positions to the initial position.

By such slider biasing mechanism, when the cartridge is taken out of the tray and the slider returns to the initial position, the selector can be returned to the initial state automatically.

In the tray of the invention, preferably, the biasing force of the slider biasing mechanism is set larger than the biasing force of the selector biasing mechanism.

By such setting, when the cartridge is mounted by resisting the biasing force of the both forcing means, the selector can select securely.

In the tray of the invention, preferably, the slider includes a bent part bending in the loading direction from a slider's opposite surface to the cartridge which faces to the cartridge.

By such bent part provided in the slider, the slider can abut against the cartridge at this bent part or its vicinity, and wrong insertion can be detected by a narrower width.

In the tray of the invention, preferably, the slider moves from the initial position to the third stopping position when the slider is pressed in the loading direction.

In this case, the cartridge having a shape for pressing the slider in the loading direction along with loading action on the tray in specified direction can be mounted in specified direction.

In the tray of the invention, preferably, the slider moves from the initial position to the second stopping position when the selector of the slider is pressed in the loading direction.

In this case, the cartridge having a shape for pressing the selector in the loading direction along with mounting action on the tray in specified direction can be mounted in specified direction.

In the tray of the invention, preferably, the selector of the slider is provided with a selector's opposite part to the cartridge, the selector's opposite part to the cartridge moves in the loading direction farther than the slider's opposite surface to the cartridge when the shder moves in the loading direction.

By such setting, when the cartridge is mounted on the tray, a suitable slider stopping position (that is, the slider moving distance) is selected in accordance with the cartridge.

In the tray of the invention, preferably, the tray base further includes a large disk platform for mounting a disk of large diameter, the selector has an extension extending in the inward direction of the tray base, and the leading end of the extension is located in the vicinity of the peripheral edge of the large disk platform when the slider is at the initial position.

In this constitution, when a large disk is mounted on the large disk platform, the outer periphery of the large disk can be guided effectively.

In the tray of the invention, preferably, the tray can mount a cartridge of an almost square shape (that is, almost square shape in a plan view) in an outer shape of a principal plane substantially parallel to an information recording medium contained inside, having a front side extending like an arch, a straight rear side facing the front side with both angles chamfered, and a pair of lateral sides coupling the rear side and front side, and the slider moves from the initial position to the second stopping position when the front side presses the selector in the loading direction along with mounting action of the cartridge on the tray base.

In this case, in the cartridge of almost square shape in a plan view with an arch bulging front side, when mounting this cartridge on the tray, the slider stopping position (that is, the slider moving distance) is selected by the selector, and thereby wrong mounting of the cartridge can be detected.

In the tray of the invention, preferably, the both chamfered angles of the rear side abut against the selector when the cartridge is mounted on the tray with the rear part thereof is mounted in the loading direction (that is, in a state that the rear part thereof directs to the loading direction), and the selector selects the first stopping position so that the slider is stopped at the first stopping position.

In this case, when the cartridge is mounted in wrong direction in longitudinal direction, the slider is stopped at the first stopping position, so that wrong mounting of the cartridge is detected securely.

In the tray of the invention, preferably, either the corner consecutive from the lateral side to the front side or the chamfered angle consecutive from the lateral side to the rear side abuts against the selector when the cartridge is mounted on the tray with either one of the pair of lateral sides thereof is mounted in the loading direction (that is, in a state that either one of the pair of lateral sides thereof directs to the loading direction), and the selector selects the first stopping position so that the slider is stopped at the first stopping position.

In this constitution, if the cartridge is mounted wrong sideways, the shder is stopped at the first stopping position, so that wrong mounting of the cartridge is detected securely.

In the tray of the invention, preferably, the tray can mount selectively either a first cartridge of an almost rectangular shape (that is, almost rectangular shape in a plan view) in an outer shape of a principal plane substantially parallel to an information recording medium contained inside, or a second cartridge of an almost square shape (that is, almost square shape in a plan view) in an outer shape of a principal plane substantially parallel to an information recording medium contained inside, having a front side extending like an arch, a straight rear side facing the front side with both angles chamfered, and a pair of lateral sides coupling the rear side and front side. The first cartridge presses the slider in the loading direction along with mounting action on the tray base, and the slider slides from the initial position to the third stopping position, and the second cartridge causes its front end to press the selector in the loading direction along with mounting action on the tray base, and the slider moves from the initial position to the second stopping position.

In this case, the tray can be effectively applied in any of two cartridges mutually different in outer shape, and wrong mounting can be detected effectively if a cartridge is mounted on a wrong direction.

In the tray of the invention, preferably, the both chamfered angles of the rear side abut against the selector when the second cartridge is mounted on the tray with the rear part thereof is mounted in the loading direction (that is, in a state that the rear part thereof directs to the loading direction), and the selector selects the first stopping position, so that the slider is stopped at the first stopping position.

In this case, if the second cartridge is mounted wrong direction in longitudinal direction, the slider is stopped at the first stopping position, so that wrong mounting of the second cartridge can be detected securely.

In the tray of the invention, preferably, either the corner consecutive from the lateral side to the front side or the chamfered angle consecutive from the lateral side to the rear side abuts against the selector when the second cartridge is mounted on the tray with either one of the pair of lateral sides thereof is mounted in the loading direction (that is, in a state that either one of the pair of lateral sides thereof directs to the loading direction), and the selector selects the first stopping position so that the slider is stopped at the first stopping position.

In this case, if the second cartridge is mounted wrong sideways, the slider is stopped at the first stopping position, so that wrong mounting of the second cartridge can be detected securely.

The recording/reproducing apparatus of the invention includes a recording/reproducing device having an optical head for receiving an information signal optically from an information layer of an information recording medium, and a rotating mechanism for rotating the information recording medium; any one of the above-described trays for mounting a cartridge containing the information recording medium m its inside, and having a window provided in a principal plane substantially parallel to the information recording medium for inserting the optical head and the rotating mechanism, and a shutter for opening/closing the window; and a conveying device for conveying the tray back and forth between a detaching/attaching position for detaching/attaching the cartridge, and a recording/reproducing position corresponding to the recording/reproducing device.

According to such recording/reproducing apparatus, when mounting the cartridge on the tray for recording or reproducing the information recording medium, the function and effect obtained by the tray in any one of above-described trays can be obtained, and when mounting the cartridge on the tray, mounting direction of the cartridge can be detected to be specified direction or wrong direction by the difference in the moving distance of the slider, and the user can easily recognize wrong mounting if the cartridge is mounted in wrong direction.

As explained above, according to the invention, in a cartridge of an almost square shape in plan view, having an outer shape formed by a front side extending like an arch, a rear side facing the front side with both angles chamfered, and a pair of lateral sides coupling the rear side and front side, the user easily recognizes whether the mounting direction on the tray is specified direction or wrong direction. Therefore, it effectively prevents troubles such as failure in recording or reproducing due to wrong mounting after the cartridge is inserted into the recording/reproducing apparatus main body, or inability of discharge of the cartridge once loaded inside.

### BRIEF DESCRIPTION OF THE DRAWING

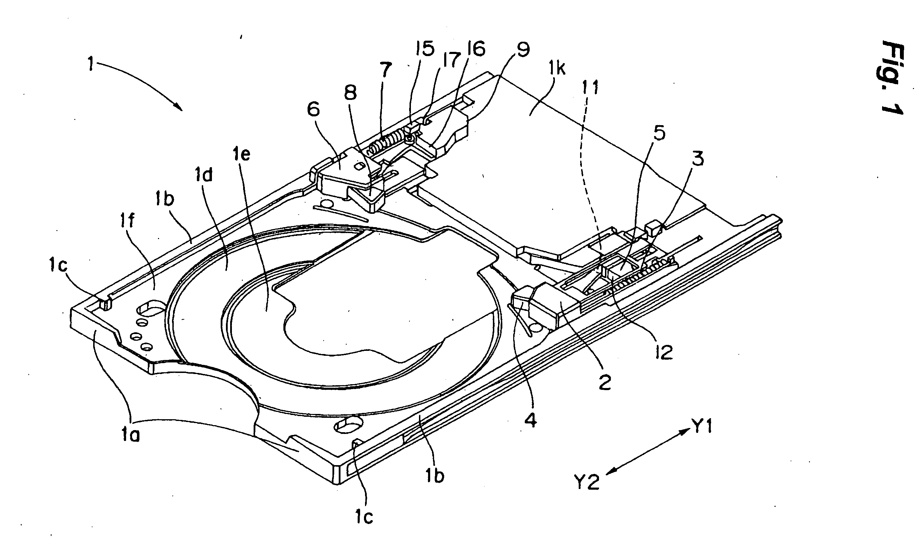

Fig. 1 is a perspective view showing an overall structure of a tray in a first preferred embodiment of the invention;

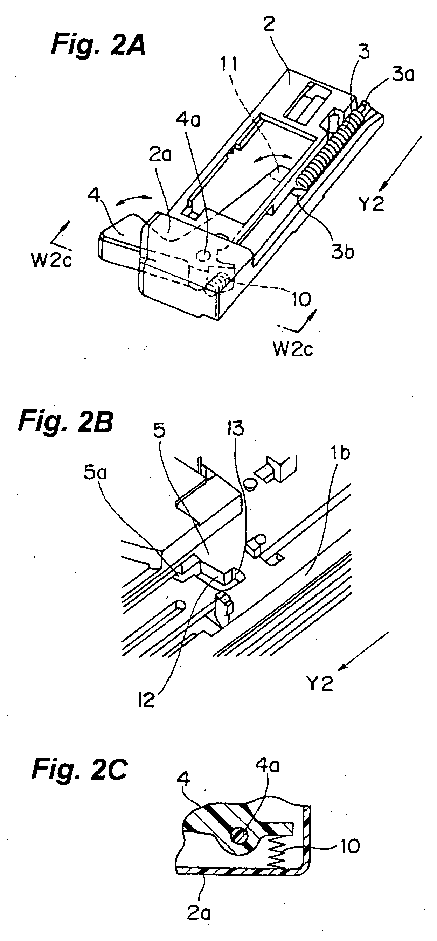

Fig. 2A is a perspective view of one slider provided in the tray;
Fig. 2B is a perspective view of one positioning part provided in the tray;
Fig. 2C is an explanatory cross sectional drawing partially taken along a line of W2c-W2c in Fig. 2A;

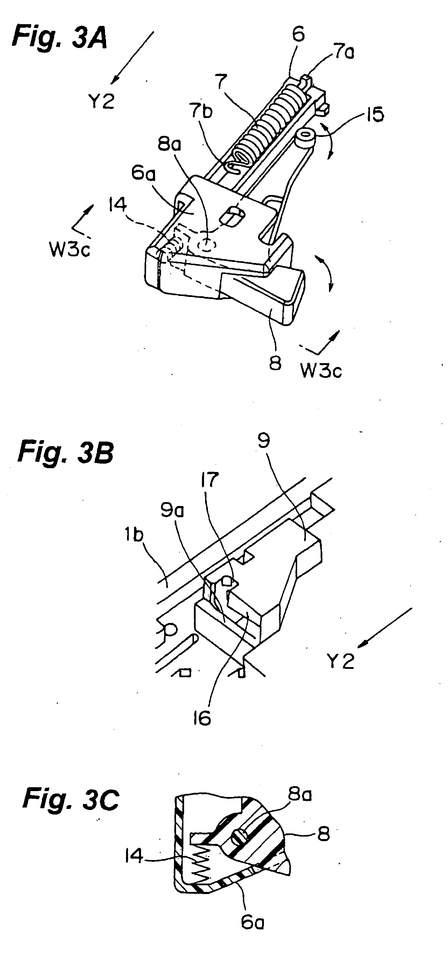

Fig. 3A is a perspective view of the other slider provided in the tray;
Fig. 3B is a perspective view of the other positioning part provided in the tray;
Fig. 3C is an explanatory cross sectional drawing partially taken along a line of W3c-W3c in Fig. 3A;

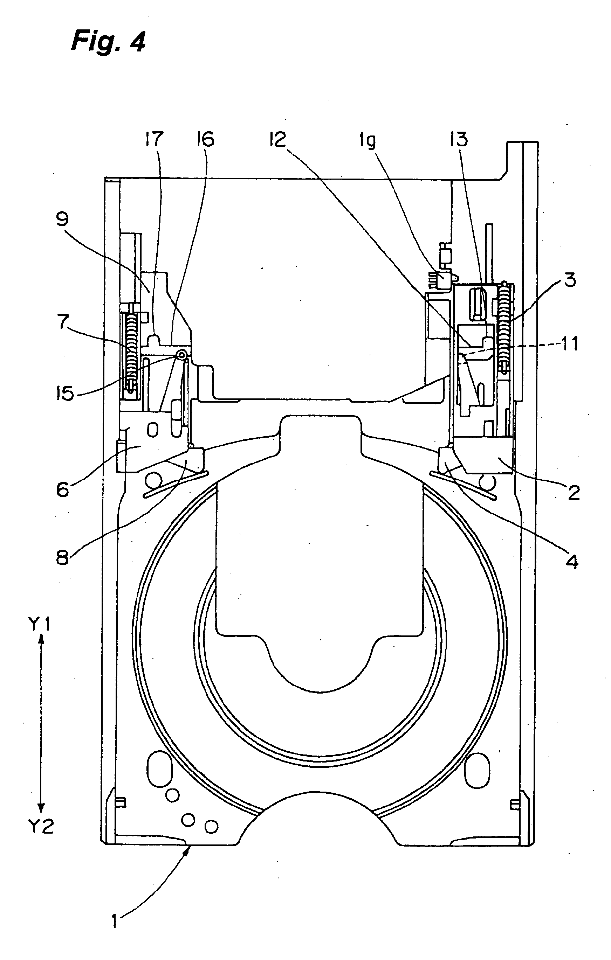

Fig. 4 is an explanatory plan view of the tray;

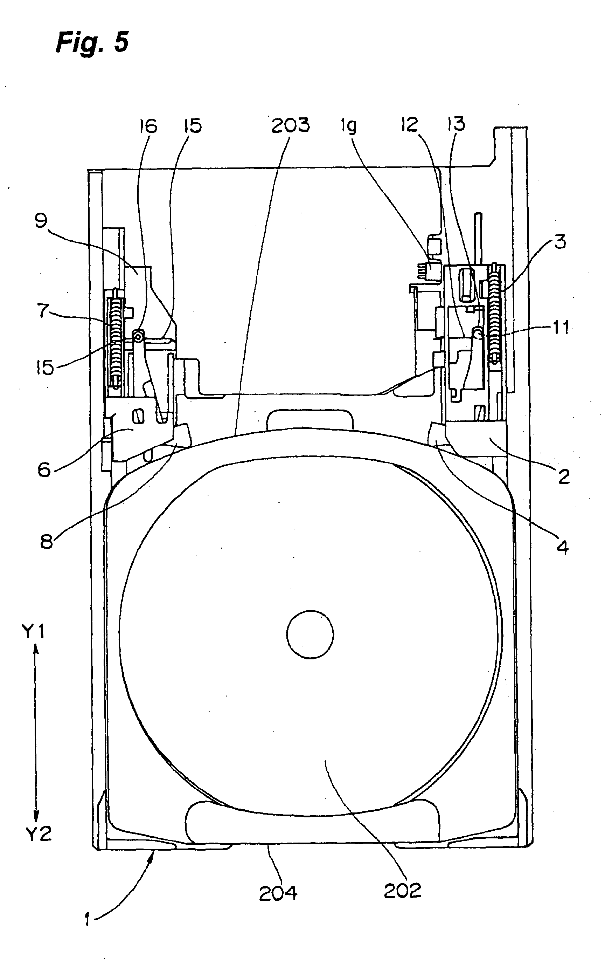

Fig. 5 is an explanatory plan view showing a specified mounting state of a cartridge on the tray;

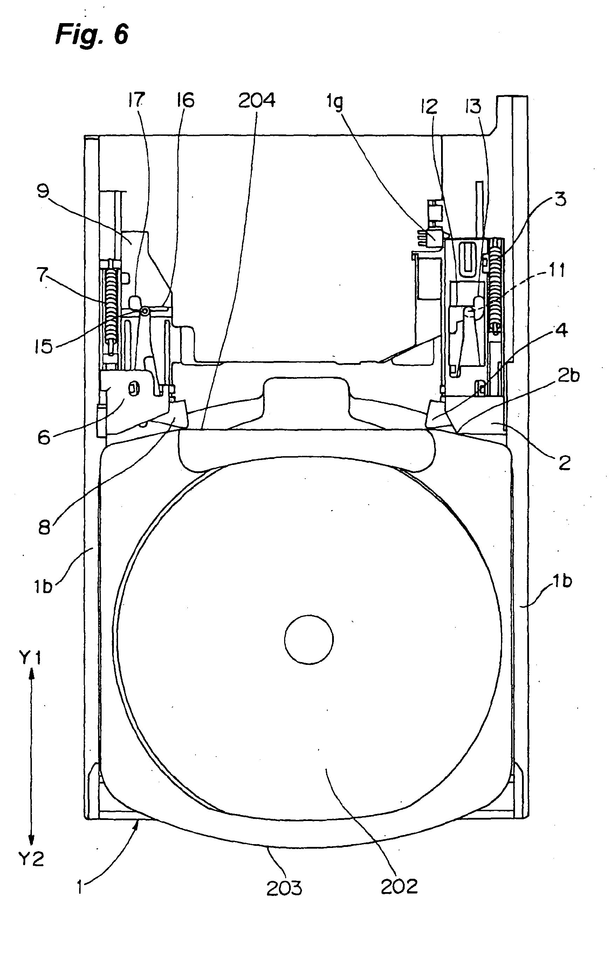

Fig. 6 is an explanatory plan view showing a wrong mounting state reverse in longitudinal direction of the cartridge on the tray;

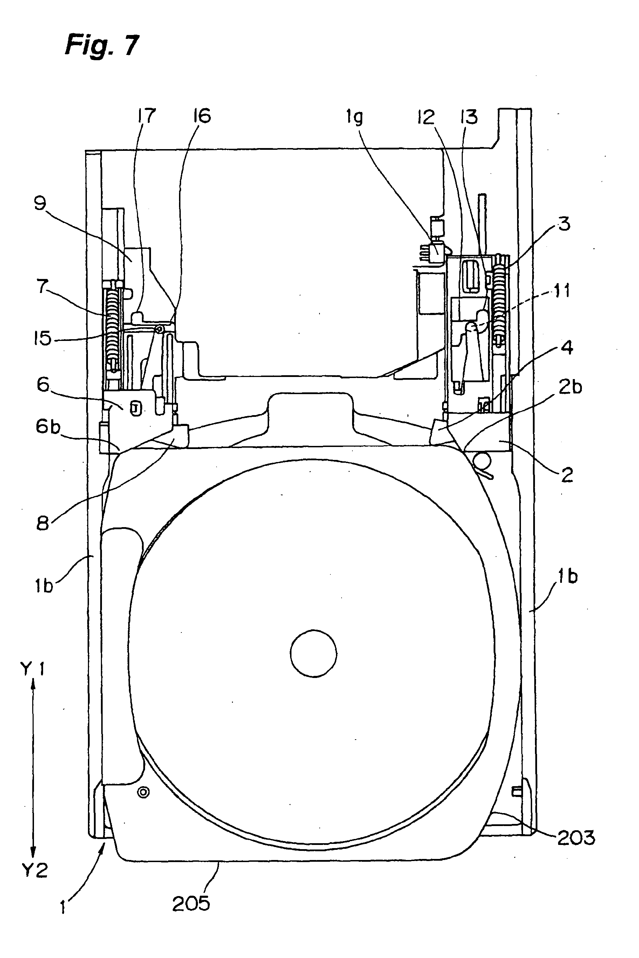

Fig. 7 is an explanatory plan view showing a wrong mounting state in sideways direction of the cartridge on the tray;

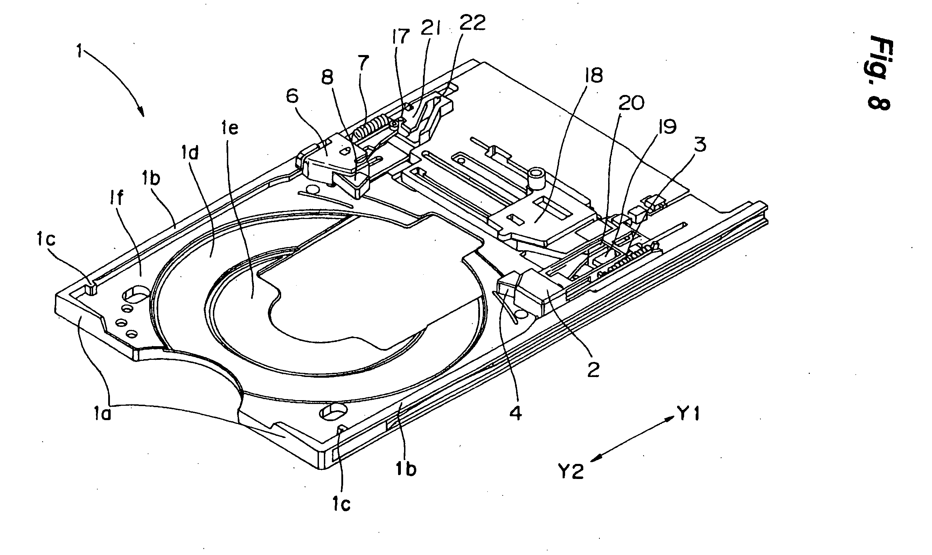

Fig. 8 is a perspective view showing an overall structure of a tray in a second preferred embodiment of the invention;

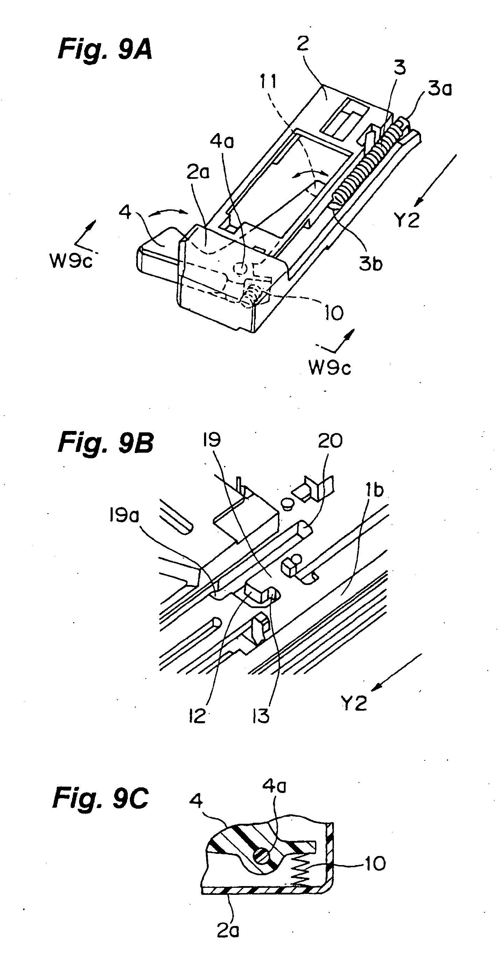

Fig. 9A is a perspective view of one slider provided in the tray in the second preferred embodiment;
Fig. 9B is a perspective view of one positioning part provided in the tray;
Fig. 9C is an explanatory cross sectional drawing partially taken along a line of W9c-W9c in Fig. 9A;

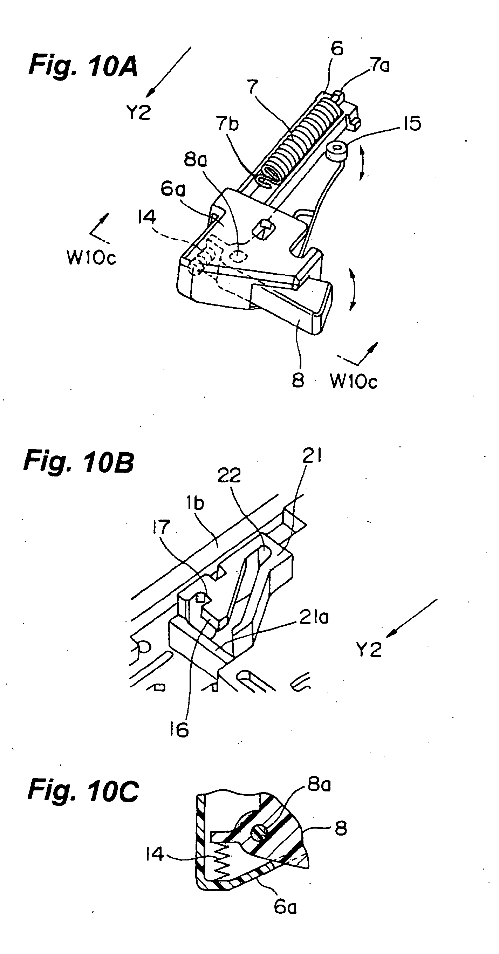

Fig. 10A is a perspective view of the other slider provided in the tray in the second preferred embodiment;
Fig. 10B is a perspective view of the other positioning part provided in the tray;
Fig. 10C is an explanatory cross sectional drawing partially taken along a line of W10c-W10c in Fig. 10A;

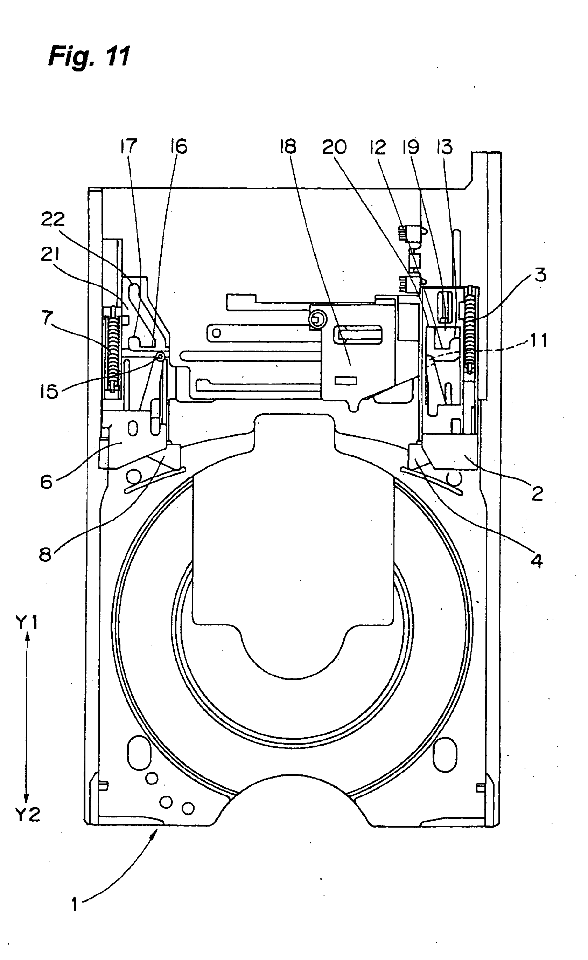

Fig. 11 is an explanatory plan view of the tray in the second preferred embodiment;

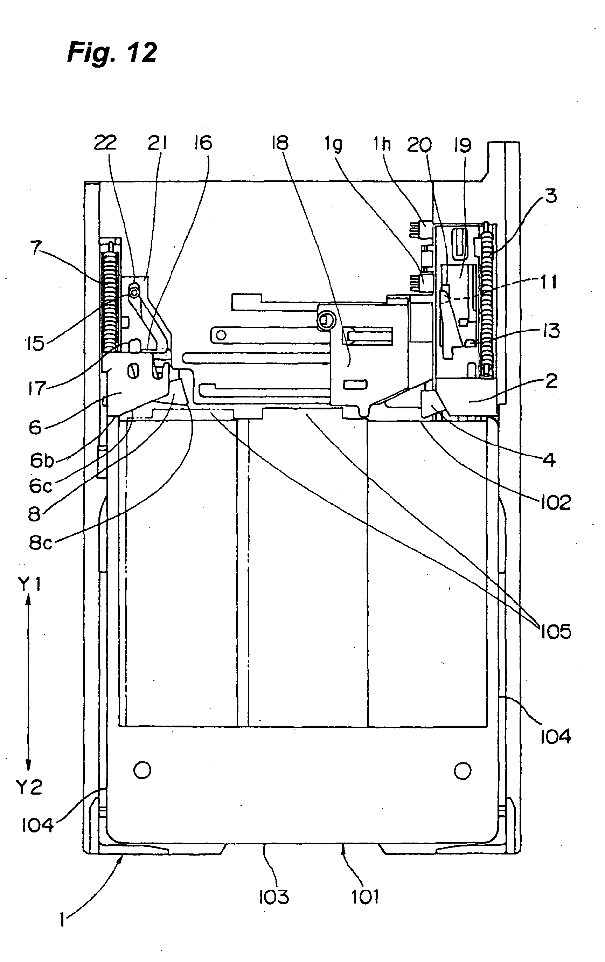

Fig. 12 is an explanatory plan view showing a specified mounting state of a first cartridge on the tray in the second preferred embodiment;

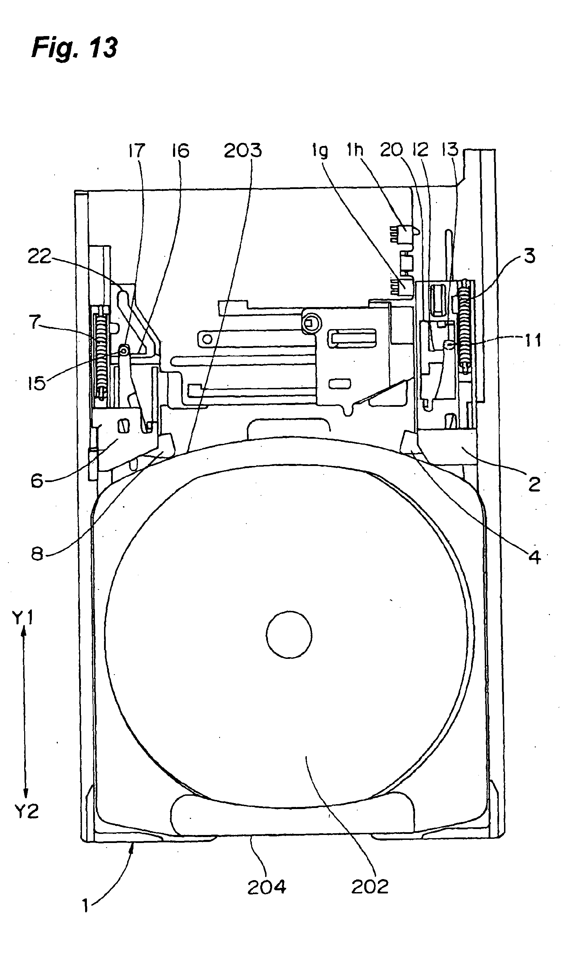

Fig. 13 is an explanatory plan view showing a specified mounting state of a second cartridge on the tray in the second preferred embodiment;

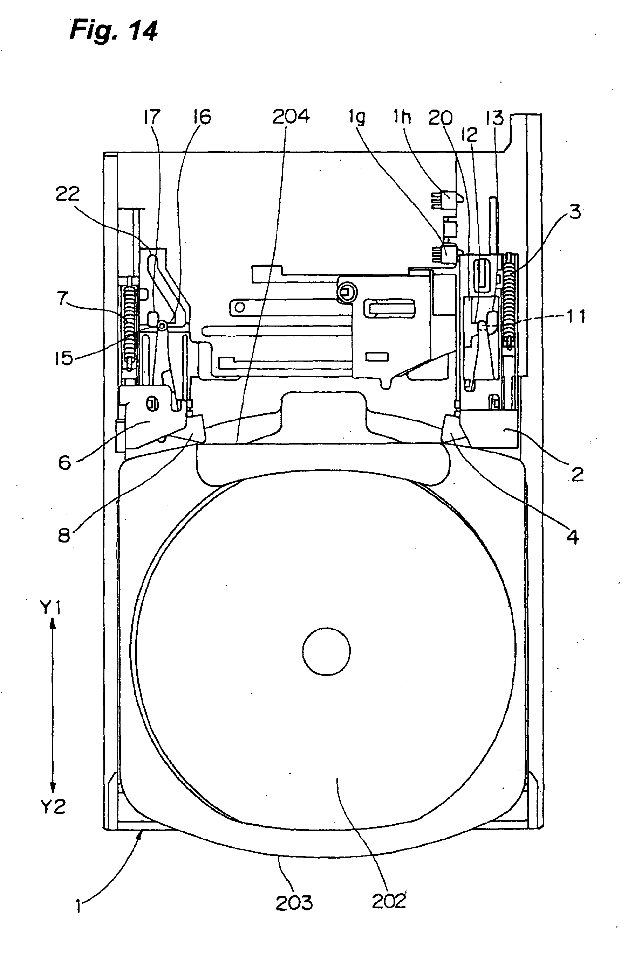

Fig. 14 is an explanatory plan view showing a wrong mounting state reverse in a longitudinal direction of a second cartridge on the tray in the second preferred embodiment;

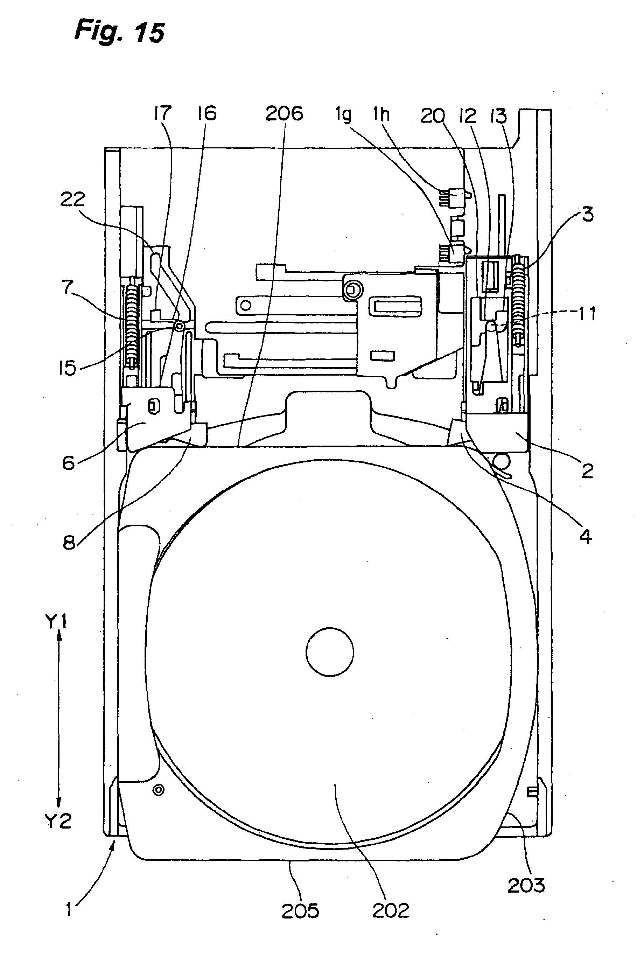

Fig. 15 is an explanatory plan view showing a wrong mounting state in sideways direction of the second cartridge on the tray in the second preferred embodiment;

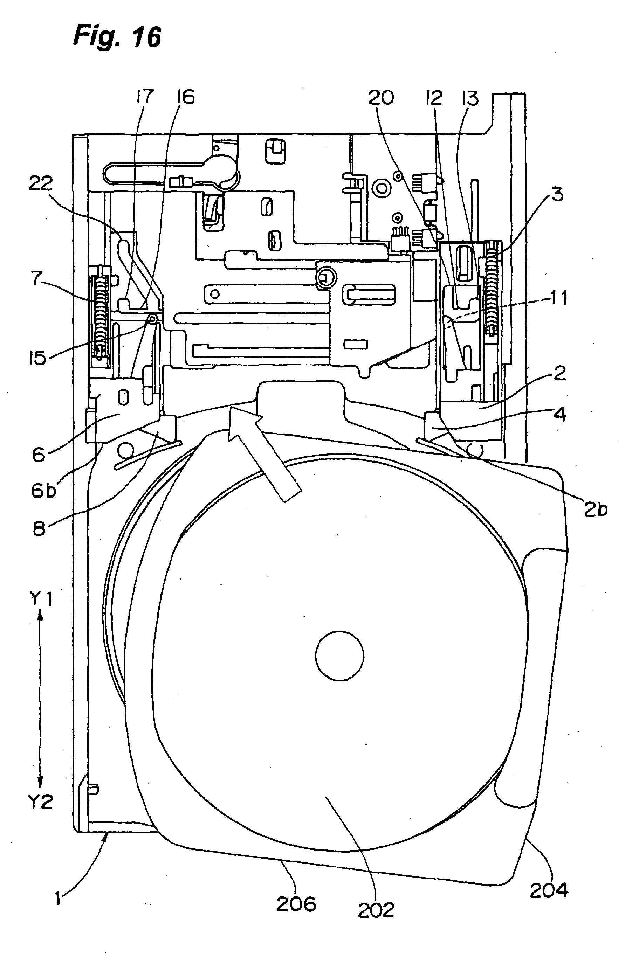

Fig. 16 is an explanatory plan view showing a wrong mounting state in an oblique direction of the second cartridge on the tray in the second preferred embodiment;
Fig. 17 is an explanatory plan view showing an example of an almost rectangular (first) cartridge in plan view;
Fig. 18 is a perspective view showing an example of an almost square (second) cartridge in plan view;
Fig. 19 is an explanatory plan view of the second cartridge;

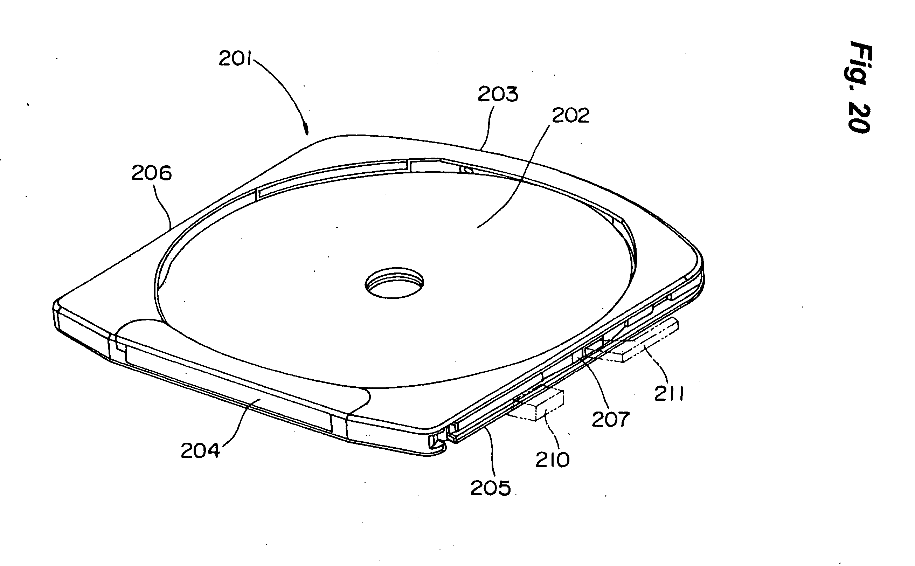

Fig. 20 is a perspective view of shutter opening/closing mechanism of the second cartridge;
Fig. 21 is an explanatory plan view of a mounting state of a cartridge on tray in the prior art;
Fig. 22 is an explanatory plan view of a mounting state of cartridge on a tray in another prior art;

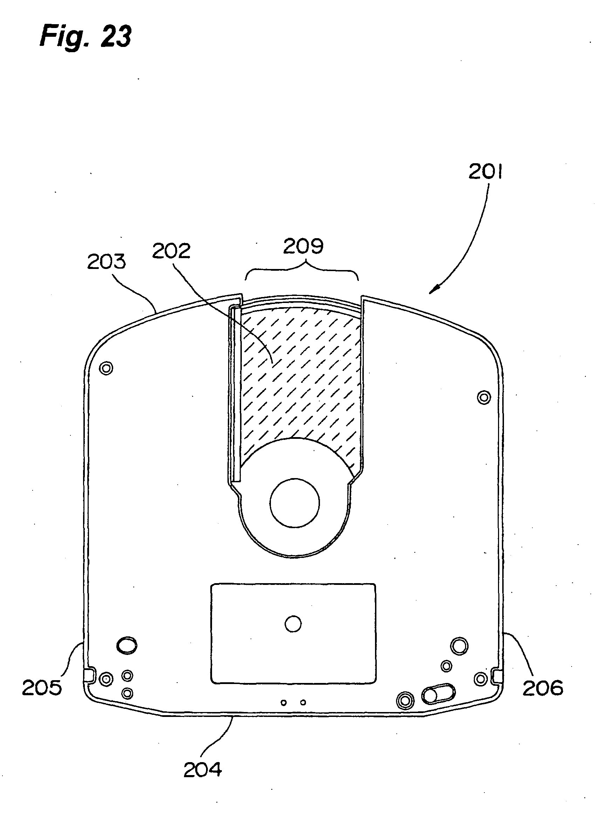

Fig. 23 is an explanatory plan view of a reverse side of the second cartridge;

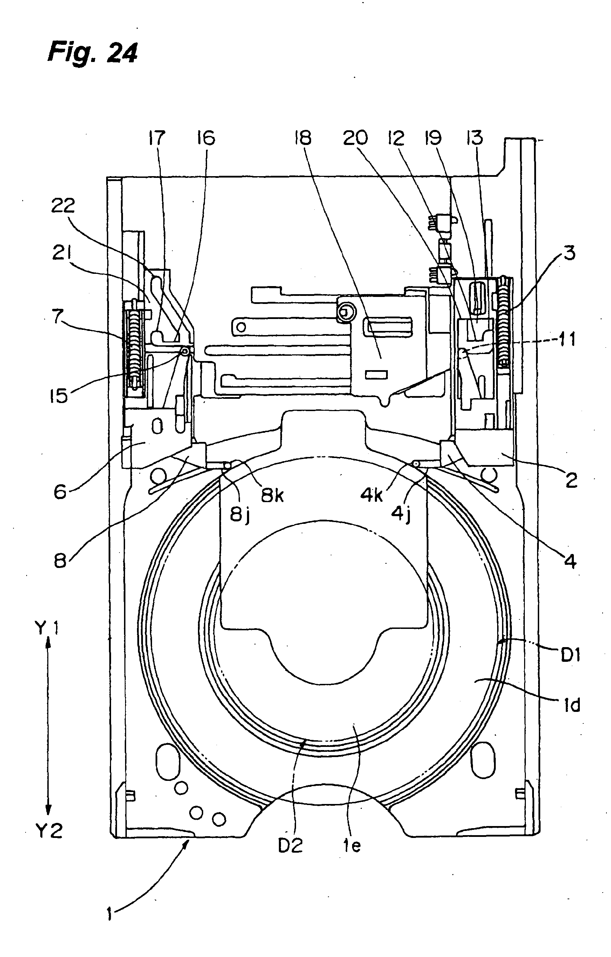

Fig. 24 is an explanatory plan view of tray in a modified example of the preferred embodiment of the invention;

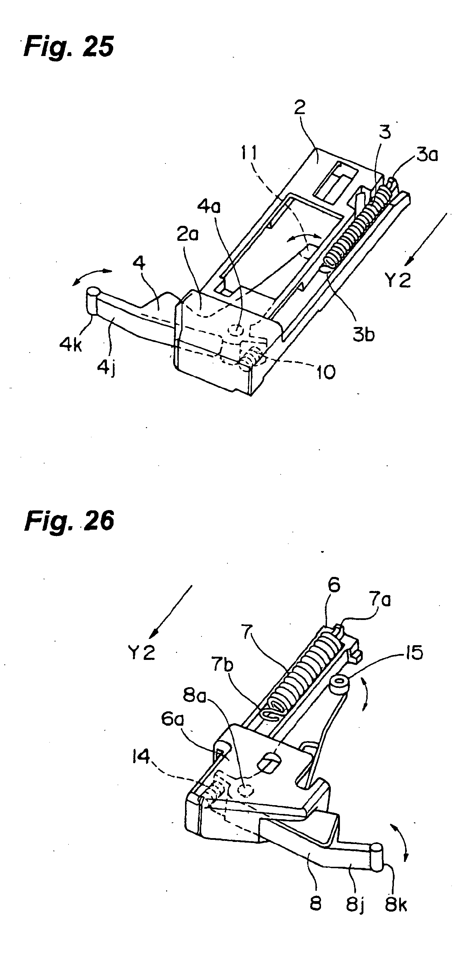

Fig. 25 is a perspective view of one slider provided in the tray in the modified example; and
Fig. 26 is a perspective view of the other slider provided in the tray in the modified example.

### DESCRIPTION OF THE PREFERRED EMBODIMENTS

Referring now to the accompanying drawings, preferred embodiments of the invention will be described specifically below.

Fig. 1 is a perspective view showing generally a structure of a tray in a first preferred embodiment of the invention. In Fig. 1, reference numeral 1 designates a tray, reference numeral 1a is front wall of the tray 1, 1b is a lateral wall of the tray 1, 1c is a bump for positioning a cartridge provided in the tray 1, and 1d and 1e are disk platforms for mounting a cartridge-free disk (so-called bare disk not having a cartridge for containing). Reference numeral 1d designates a platform for mounting a large bare disk (so-called a large disk: a bare disk having a nominal diameter of 12 cm), and 1e is the platform for mounting a small bare disk (so-called a small disk: a bare disk having a nominal diameter of 8 cm).

Reference numerals 2 and 6 are sliders, 3 and 7 are slider biasing mechanism for biasing the sliders 2 and 6, 4 and 8 are selectors for selecting the stopping position of the sliders 2 and 6, and 5 and 9 are positioning mechanism for determining the stopping position of the sliders 2 and 6. The shder biasing mechanism 3 and 7 are intended to bias the sliders 2 and 6 in the disk discharge direction (unloading direction: arrow Y2 direction). The selectors 4 and 8 are for selecting the stopping position, out of first stopping positions 12 and 16 and second stopping positions 13 and 17, when sliding and moving the sliders 2 and 6 from the initial position.

The construction of the slider 2, selector 4 and positioning mechanism 5 is explained by referring to Figs. 2A to 2C.

Fig. 2A is an enlarged perspective view to show the engagement relation the slider 2 and selector 4. As shown in the drawing, the slider 2 is urged in the unloading direction Y2 by the slider biasing (or urging) mechanism 3 (an extension spring of coil shape is used in this preferred embodiment). One end of the slider biasing mechanism 3 is a slider fixing part 3a which is fixed to the slider 2, and the other end thereof is a tray fixing part 3b which is fixed to the tray 1.

The slider 2 has a box 2a, and the base part of the selector 4 is contained in this box 2a. The base part of the selector 4 is rotatably supported on the upper and lower walls of the box 2a by way of a rotary shaft 4a. And a selector engaging part 11 is urged in the inside direction of the tray 1 by way of selector biasing mechanism 10 (a compression coil spring is used in this preferred embodiment: refer to Fig. 2C).

The slider 2, together with the selector 4, slides or moves (hereinafter, any one of them is called "move" in the specification) on the tray 1 (that is, on a flat tray base 1k) in the loading direction Y1. The lateral wall of the unloading Y2 side of the box 2a and the peak of a triangle (the selector's opposite part to the cartridge) formed at the unloading direction Y2 side of the selector 4 are positioned so as to be substantially flush. In order to enhance the accuracy of distinguishing the outer shape of cartridge, it is preferable that the selector's opposite part to the cartridge protrudes in unloading Y2 side with respect to the unloading Y2 side wall of the box 2a. However, the protrusion amount must be limited within a range not to interfere with the outer periphery of the bare disk as will be explained later.

Fig. 2B is an enlarged perspective view showing the structure of positioning mechanism 5 for defining the moving position of the slider 2 in moving action of the slider 2. The positioning mechanism 5 defines the moving position of the slider 2 as the selector engaging part 11 is engaged with first stopping position 12 or second stopping position 13 in moving action of the slider 2. Before the slider 2 moves in the loading direction Y1, the selector engaging part 11 is at the initial position remote from the first stopping position 12 in the unloading direction Y2, and is stopped at the wall 5a by the biasing force of the slider biasing mechanism 3.

When the box 2 a of the slider 2 is pressed in the loading direction Y1, the slider 2 moves by overcoming the biasing force of the slider biasing mechanism 3, and the selector engaging part 11 moves on the tray 1 from the wall 5a to the first stopping position 12. As the selector engaging part 11 abuts against the first stopping position 12, the slider 2 is stopped at a position corresponding to the first stopping position 12.

On the other hand, when the selector 4 is pressed in the loading direction Y1, by overcoming the biasing force of the selector biasing mechanism 10, the selector engaging part 11 rotates about the rotary shaft 4a substantially to the limit of rotation, and moves in the direction of the lateral wall 1b of the tray 1, and moves to a position corresponding to the second stopping position 13 in the unloading direction Y2. Further the slider 2 moves in the loading direction Y1 by overcoming the biasing force of the slider biasing mechanism 3, and the selector engaging part 11 abuts against the second stopping position 13, so that the slider 2 is stopped at a position corresponding to the second stopping position 13.

By this operation, depending on the pressing position of the slider 2, the selector 4 selects either the first stopping position 12 or second stopping position 13. That is, the slider 2 moves in a first distance or a second distance from the initial position. Meanwhile, if the angle of rotation about the rotary shaft 4a is small, the selector engaging part 11 rotates only in a range of the wall 5a facing the first stopping position 12, and the selector 4 securely selects the first stopping position 12.

The construction of the slider 6, selector 8 and positioning mechanism 9 is explained by referring to Figs. 3A to 3C. This construction is basically same as the construction of the slider 2, selector 4 and positioning mechanism 5 shown in Figs. 2A to 2C.

Fig. 3A is an enlarged perspective view to show the engagement relation the slider 6 and selector 8. As shown in the drawing, the slider 6 is biased (or urged) in the unloading direction Y2 by the slider biasing mechanism 7 (an extension spring of coil shape is used in this preferred embodiment). One end of the slider biasing mechanism 7 is a slider fixing part 7a which is fixed to the slider 6, and the other end thereof is a tray fixing part 7b which is fixed to the tray 1.

The slider 6 has a box 6a, and the base part of the selector 8 is contained in this box 6a. The base part of the selector 8 is rotatably supported on the upper and lower walls of the box 6a by way of a rotary shaft 8a. And, a selector engaging part 15 is biased (or urged) in the inside direction of the tray 1 by way of selector biasing mechanism 14 (a compression coil spring is used in this preferred embodiment: refer to Fig. 3C).

The slider 6, together with the selector 8, moves on the tray 1 (that is, on a flat tray base 1k) in the loading direction Y1. The lateral wall of the unloading Y2 side of the box 6a and the peak of a triangle (the selector's opposite part to the cartridge) formed at the unloading direction Y2 side of the selector 8 are positioned so as to be substantially flush. In order to enhance the accuracy of distinguishing the outer shape of cartridge, it is preferable that the selector's opposite part to the cartridge protrudes in unloading Y2 side with respect to the unloading Y2 side wall of the box 6a. However, the protrusion amount must be limited within a range not to interfere with the outer periphery of the bare disk as will be explained later.

Fig. 3B is an enlarged perspective view showing the structure of positioning mechanism 9 for defining the moving position of the slider 6 in moving action of the slider 6. The positioning mechanism 9 defines the moving position of the slider 6 as the selector engaging part 15 is engaged with a first stopping position 16 or a second stopping position 17 in moving action of the slider 6.

Before the slider 6 slides in the loading direction Y1, the selector engaging part 15 is at the initial position remote from the first stopping position 16 in the unloading direction Y2, and is stopped at the wall 9a by the biasing force of the slider biasing mechanism 7. When the box 6a of the slider 6 is pressed in the loading direction Y1, the slider 6 moves by overcoming the biasing force of the slider biasing mechanism 7, and the selector engaging part 15 moves on the tray 1 from the initial position in the vicinity of the wall 9a to the first stopping position 16. As the selector engaging part 15 abuts against the first stopping position 16, the slider 6 is stopped at a position corresponding to the first stopping position 16.

On the other hand, when the selector 8 is pressed in the loading direction Y1, by overcoming the biasing force of the selector biasing mechanism 14, the selector engaging part 15 rotates about the rotary shaft 8a almost to the limit of rotation, and moves in the direction of the lateral wall 1b of the tray 1, and moves to a position corresponding to the second stopping position 17 in the unloading direction Y2. Further, the slider 6 moves in the loading direction Y1 by overcoming the biasing force of the slider biasing mechanism 7, and the selector engaging part 15 abuts against the second stopping position 17, so that the slider 6 is stopped at a position corresponding to the second stopping position 17.

By this operation, depending on the pressing position of the slider 6, the selector 8 selects either the first stopping position 16 or second stopping position 17. That is, the slider 6 moves in a first distance or a second distance from the initial position. Meanwhile, if the angle of rotation about the rotary shaft 8a is small, the selector engaging part 15 rotates only in a range of the wall 9a facing the first stopping position 16, and the selector 8 securely selects the first stopping position 16.

In this preferred embodiment, when the selector engaging part 11 of the selector 4 is engaged with the initial position, first stopping position 12 or second stopping position 13 of the positioning mechanism 5, it is configured so that the engaging bump of the selector engaging part 11 may be engaged from above the positioning mechanism 5. On the other hand, when the selector engaging part 15 of the selector 8 is engaged with the initial position, first stopping position 16 or second stopping position 17 of the positioning mechanism 9, it is configured so that the engaging bump of the selector engaging part 15 may be engaged from beneath the positioning mechanism 9. In such configuration, the selectors 4 and 8 can be formed in a same shape, and the selectors 4 and 8 can be produced at low cost.

Incidentally, needless to say, the engaging direction of the engaging bumps of the selector engaging parts 11, 15 with the positioning mechanism 5, 9 may be set in the same direction.

In the preferred embodiment, the slider biasing mechanism 3 and 7 are composed of tension coil spring, but not limited to this, other springs are also applicable, for example, leaf spring, compression coil spring, or torsion coil spring. Similarly, the selector biasing mechanism 10 and 14 are composed of compression coil spring, but not limited to this, other springs are also applicable, for example, leaf spring, tension coil spring, or torsion coil spring.

Further, the biasing force of the shder biasing mechanism 3 and 7 is set to be larger than the biasing force of the selector biasing mechanism 10 and 14. By this setting, as the selector 4 or 8 is pressed, the selector engaging part 11 or 15 rotates to a position corresponding to the positioning mechanism 5 or 9, and then the slider 2 or 6 moves securely in this sequence. That is, when the slider moves in the loading direction by overcoming the biasing force of the both forcing means, the selector can perform the selecting operation securely.

When the tray 1 shown in Fig. 1 is used as a tray for cartridge loading in a recording/reproducing apparatus, an example is explained by referring to the accompanying drawings.

Fig. 4 is a plan view showing the structure of the tray 1 in Fig. 1. The cartridge is to be mounted on the tray 1 along the loading direction, out of the loading direction (supply direction) Y1 and unloading direction (discharge direction) Y2.

Fig. 5 shows a second cartridge 201 (for example, BD cartridge) in an almost square shape in plan view, in an outer shape of cartridge, having a front side like an arch and a rear side with both angles chamfered, which is mounted in specified direction. The specified mounting direction of the second cartridge 201 is set so that the front part (front wall 203) of the cartridge 201 is directed in the loading direction.

As clear from comparison between Figs. 4 and 5, as the front wall 203 of the second cartridge 201 abuts against the lateral wall of the selector 4 provided in the slider 2 and the lateral wall of the selector 8 provided in the slider 6, the selector engaging parts 11 and 15 rotate from the initial position to the position corresponding to the engagement position with the second stopping positions 13 and 17. Later, as the sliders 2 and 6 move in the loading direction Y1 by the second distance, the second cartridge 201 is correctly mounted on the tray 1 (in specified mounting direction).

As the slider 2 slides in the loading direction Y1 up to the second stopping position 13, the lateral side of the slider 2 turns on a cartridge detection switch 1g to start operation of tray loading mechanism provided in the main body of recording/reproducing apparatus (not shown in the drawing). And, recording or reproduction is performed on the information recording medium 202 contained in the second cartridge 201.

Fig. 6 shows the second cartridge 201 mounted on the tray 1 so that the rear part is directed to the loading direction Y1 at 180° deviated from the specified mounting direction (that is, reversely in longitudinal direction).

In this case, as shown in Fig. 6, as the rear wall 204 presses the selectors 4 and 8 in the loading direction Y1, the selector engaging parts 11 and 15 rotate to the lateral wall 1b side of the tray 1. However, before the selector engaging parts 11 and 15 rotate up to the limit of rotation or its vicinity, the both chamfered parts of the rear wall 204 abut against the slider 2 and/or 6 (in the example in Fig. 6, abutting only against bent part 2b of the slider 2 or its vicinity), the slider 2 and/or 6 (in the example in Fig. 6, only the slider 2) moves in the loading direction Y1. At this time, the selector engaging parts 11 and 15 are insufficient in amount of rotation, rotating only to the first stopping positions 12 and 16 from the initial position, and the sliders 2 and 6 stop at the first stopping position.

In this case, therefore, the second cartridge 201 is stopped in a state projecting from the front wall 1a of the tray 1, and the user notices wrong mounting of the second cartridge 201. If the user is not aware of wrong mounting, when the slider 2 stops at the first stopping position, the detection switch 1g remains in OFF position, and the tray loading mechanism of the main body of recording/reproducing apparatus is not put in action. Therefore, the recording/reproducing apparatus does not load the second cartridge 201 in the main body of the recording/reproducing apparatus.

As a result, problems of wrong loading of the second cartridge 201 into the main body of the recording/reproducing apparatus and inability of discharge of the wrong loaded second cartridge 201 can be solved. That is, the user securely recognizes wrong mounting of the second cartridge 201, and troubles due to wrong mounting of the second cartridge 201 can be prevented.

Fig. 7 shows the second cartridge 201 mounted in a wrong direction at 90° deviated from the specified mounting direction (that is, sideways), so that its lateral part is directed in the loading direction Y1, that is, the lateral wall 205 having the shutter opening 207 is set at the front wall 1a side of the tray 1.

Also in this case, the straight part of the lateral wall 206 of the loading direction Y1 side presses the selectors 4 and 8, but before rotating up to the limit of rotation, the chamfered angles of the lateral wall 206 and front wall 203 abut against the bent part 2b of the shder 2 or its vicinity, and the chamfered angles of the lateral wall 206 and rear wall 204 of the cartridge 201 abut against the bent part 6b of the slider 6 or its vicinity, and hence the selector engaging parts 11 and 15 can rotate only up to the position corresponding to the first stopping positions 12 and 16.

Therefore, the sliders 2 and 6 can move only up to the first stopping positions 12 and 16 in the loading direction, and hence the second cartridge 201 projects from the front wall 1a of the tray 1, and the detection switch 1g does not operate, so that the user can easily recognize wrong mounting of the second cartridge 201.

Thus, when the tray 1 of the preferred embodiment is applied in a recording/reproducing apparatus, wrong mounting of the second cartridge 201 can be prevented perfectly. In particular, for the purpose of enhancing the appearance quality as the recording/reproducing apparatus, as shown in Fig. 1, if the height of the front wall 1a and lateral wall 1b is set relatively low from the cartridge platform 1f, wrong mounting of the second cartridge 201 can be prevented perfectly.

Wrong mounting includes a case of placing upside down, but in the case of the second cartridge 201 shown in this preferred embodiment, it is a one-side cartridge that can be recorded and reproduced in one side only (the side contacting with the cartridge platform 1f), and side judging recesses 205a and 206a are provided in the second cartridge 201. Therefore, by engagement of the judging recesses 205a and 206a with the positioning bump 1c, wrong mounting can be prevented.

In this preferred embodiment, the boxes 2a and 6a of the sliders 2 and 6 are slightly different in shape, but the invention is not limited to this structure alone, and, for example, the boxes 2a and 6a may be formed symmetrically to the center line of the tray 1 orthogonal to the loading direction Y1. In this case, it is not necessary to distinguish the sliders 2 and 6, and the productivity is enhanced.

The positions of bent parts 2b and 6b can be selected at optimum position depending on the outer shape of the cartridge to be used.

The preferred embodiment shows a configuration including a pair of sliders and a pair of selectors, but the invention is not limited to such structure alone, and if the selector and positioning mechanism are not provided at one slider, the operation of the tray can be achieved similarly.

A second preferred embodiment of the invention is described below.

In the second preferred embodiment, same elements as in the first preferred embodiment are identified with same reference numerals, and detailed description is omitted.

Fig. 8 is a perspective view showing generally an overall structure of a tray in the second preferred embodiment. What differs from the structure in Fig. 1 is that positioning mechanism 19 and 21 have third stopping positions 20 and 22 in positioning mechanism 5 and 9, and that a shutter opening mechanism 18 is further provided between sliders 2 and 6.

Of these different points, the relation of the positioning mechanism 19, slider 2 and selector 4 is shown in Figs. 9A to 9C, and the relation of the positioning mechanism 21, slider 6 and selector 8 is shown in Figs. 10A to 10C.

Fig. 9Ais an enlarged perspective view showing essential parts of the slider 2 apphed in the preferred embodiment, and its configuration is same as the explanation referring to Fig. 2A. Fig. 9B is an enlarged perspective view showing essential parts of the positioning mechanism 19 applied in the preferred embodiment. The first stopping position 12 and second stopping position 13 are same as in the case of the positioning mechanism 5 in Fig. 2B. A new feature of the positioning mechanism 19 is that a third stopping position 20 is provided.

Also in this preferred embodiment, when the selector engaging part 11 is engaged with the first stopping position 12, second stopping position 13, and third stopping position 20, same as in the first preferred embodiment, the engaging bump of the selector engaging part 11 is engaged from above. The selector engaging part 11 is, in the initial state, positioned at the third stopping position 20 side as the selector 4 rotates about the rotary shaft 4a by the biasing force of the selector biasing mechanism 10 (refer to Fig. 9C), and is positioned at the initial position of the dent in the wall 19a by the biasing force of the sliding forcing means 3.

In the assembled state of the slider 2, selector 4 and positioning mechanism 19, in the initial state, the selector engaging part 11 is present only in the dent of the initial position, but when the box 2a is pressed in the direction Y1 in this state, the selector engaging part 11 straightly moves closer to the third stopping position 20, and the slider 2 stops at a position corresponding to the third stopping position 20.

The positioning of the slider 2 to the third stopping position 20 may be achieved by means that the selector engaging part 11 contacts to an end wall of the third stopping position 20. Alternatively, it may be achieved by means that the box 2a or its guide piece (not shown) contacts to a stopper (not shown) provided in the positioning mechanism 19.

When the selector 4 is pressed almost to the limit of rotation about the rotary shaft 4a, the pressing force for rotating the selector 4 is generated by pressing the second cartridge 201 in the direction Y1, and hence a pressing force in the direction Y1 also acts on the selector engaging part 11. The selector engaging part 11 moves from the dent of the initial position to the wall 19a at the Y2 side of the second stopping position 13 by way of the wall 19a facing the first stopping position 12. In this state, when the box 2a (that is, the slider 2) is pressed in the loading direction Y1, the selector engaging part 11 directly moves in the loading direction Y1, and the engaging bump of the selector engaging part 11 moves in the vicinity of the second stopping position 13. That is, the slider 2 stops at a position corresponding to the second stopping position 13.

When the selector engaging part 11 rotates about the rotary shaft 4a in a range not reaching up to the limit of rotation (that is, the selector 4 is pressed in the loading direction Y1 in a shorter distance than stopping the selector engaging part 11 at the second stopping position 13), the selector engaging part 11 rotates only in a range of the wall 19a facing the first stopping position 12, and therefore when the box 2a is pressed in the loading direction Y1, the selector engaging part 11 abuts against the first stopping position 12, and the slider 2 stops at a position corresponding to the first stopping position 12.

Fig. 10A is an enlarged perspective view showing essential parts of the slider 6 applied in the preferred embodiment, and its configuration is same as the explanation referring to Fig. 3A. Fig. 10B is an enlarged perspective view showing essential parts of the positioning mechanism 21 applied in the preferred embodiment. The first stopping position 16 and second stopping position 17 are same as in the case of the positioning mechanism 5 in Fig. 3B. A new feature of the positioning mechanism 21 is that a third stopping position 22 is provided.

Also in this preferred embodiment, when the selector engaging part 15 is engaged with the first stopping position 16, second stopping position 17, and third stopping position 22, same as in the first preferred embodiment, the engaging bump of the selector engaging part 15 is engaged from the inside of the cavity on the box of the positioning mechanism 21 toward the upper side. The selector engaging part 15 is, in the initial state, positioned at the initial position in the vicinity of the wall 21a by the biasing force of the slider biasing mechanism 7, at the third stopping position 22 side, as the selector 8 rotates about the rotary shaft 8a by the biasing force of the selector biasing mechanism 14 (refer to Fig. 10C).

In the assembled state of the slider 6, selector 8 and positioning mechanism 21, in the initial state, the selector engaging part 15 is positioned at the initial position as mentioned above, but in this state when the box 6a is pressed in the loading direction Y1, the selector engaging part 15 straightly moves closer to the third stopping position 22, and the slider 6 stops at a position corresponding to the third stopping position 22.

The positioning of the slider 6 to the third stopping position 22 may be achieved by means that the selector engaging part 15 contacts to an end wall of the third stopping position 22. Alternatively, it may be achieved by means that the box 6a or its guide piece (not shown) contacts to a stopper (not shown) provided in the positioning mechanism 21.

When the selector 8 is pressed almost to the limit of rotation about the rotary shaft 8a, the pressing force slightly acting in the direction Y1 acts on the selector engaging part 15, and the selector engaging part 15 moves from the initial position to the Y2 side of the second stopping position 17 by way of the vicinity of the wall 21a facing the first stopping position 16. In this state, when the box 6a (that is, the slider 6) is pressed to the Y1 side, the selector engaging part 15 directly moves in the direction Y1, and the engaging bump of the selector engaging part 15 moves in the vicinity of the second stopping position 17. That is, the slider 6 stops at a position corresponding to the second stopping position 17.

When the selector engaging part 15 rotates about the rotary shaft 8a in a range not reaching up to the limit of rotation (that is, the selector 8 is pressed to the Y1 side in a shorter distance than stopping the selector engaging part 15 at the second stopping position 17), the selector engaging part 15 rotates only in a range of the wall 21a facing the first stopping position 16, and therefore when the box 6a is pressed in the direction Y1, the selector engaging part 15 abuts against the first stopping position 16, and the slider 6 stops at a position corresponding to the first stopping position 16.

An example of using the tray 1 shown in Fig. 8 as the tray for cartridge loading of recording/reproducing apparatus is explained by referring to the drawings.

Fig. 11 is a plan view of structure of the tray 1 in Fig. 8. The cartridge is mounted along the loading direction Y1, out of the loading direction Y1 and unloading direction Y2.

Fig. 12 shows a mounting state of a first cartridge (for example, DVD-RAM cartridge) 101 of an almost rectangular shape in plan view in outer shape of cartridge. In this first cartridge 101, there is a window (not shown) exposing part of the information recording medium, formed from one shorter side (front edge or front wall) 102 to a principal plane almost parallel to the side of the information recording medium contained inside, and a shutter 105 is provided for opening or closing this window.

As clear from comparison between Figs. 11 and 12, both ends of the shutter side of the longer side (or lateral edge or lateral wall) 104 of the first cartridge 101 respectively press the box 2a of the slider 2 and box 6a of the slider 6, and the selector engaging part 11 of the selector 4 moves closer to the third stopping position 20 of the positioning mechanism 19, and the selector engaging part 15 of the selector 8 moves closer to the third stopping position 22 of the positioning mechanism 21.

Therefore, the sliders 2 and 6 move to the positions corresponding to the third stopping positions 20 and 22, and the shutter opening means 18 and the shutter 105 are engaged with each other. By the move of the shutter opening mechanism (not shown), the shutter 105 moves to the window opening position indicated by broken line. In order to prevent the selector 8 from contacting to a protrusion of shutter 105 which is engaged by a shutter opening/closing mechanism 18 even if the shutter 105 moves to the window opening position, the selector's opposite part 8c to the cartridge is positioned (rotated, in this embodiment) farther in Y1 direction than the protrusion. And, a bent part 6c is provided in the slider 6. Thus, by opening the window of the first cartridge 101, the contained information recording medium can be recorded or reproduced.

The shutter opening mechanism and/or tray loading mechanism can start its operation by turning on the detection switch 1h for detecting normal mounting (mounting in specified direction) of the cartridge by the lateral side of the slider 2. Accordingly, the operation is started only when the first cartridge 101 is mounted normally, and troubles due to wrong mounting of the first cartridge 101 can be prevented.

Fig. 13 shows a mounting state of second cartridge 201 (for example, BD cartridge) of an almost square shape in plan view in outer shape of cartridge, having a front side like an arch, and a rear side with both chamfered angles, in a normal direction on the tray 1 with the front part (front wall 203) directed in the loading direction Y1.

As clear from comparison between Figs. 11 and 13, as the front wall 203 of the second cartridge 201 abuts against the lateral wall of the selector 4 provided in the slider 2 and the lateral wall of the selector 8 provided in the slider 6, the selector engaging parts 11 and 15 rotate from the initial position to the position engaged with the second stopping positions 13 and 17, and later, the sliders 2 and 6 slide in the loading direction Y1 by second distance, the second cartridge 201 is correctly mounted on the tray 1. As the slider 2 slides in the loading direction up to the second stopping position 13, the lateral side of the slider 2 turns on a cartridge detection switch 1g to start operation of tray loading mechanism provided in the main body of recording/reproducing apparatus not shown in the drawing, and recording or reproduction is performed on the information recording medium 202 contained in the second cartridge 201.

Fig. 14 shows the second cartridge 201 mounted on the tray 1 so that the rear part is directed to the loading direction Y1 at 180° deviated from the specified mounting direction (that is, reversely in longitudinal direction). As shown in the drawing, as the rear wall 204 presses the selectors 4 and 8 in the loading direction Y1, the selector engaging parts 11 and 15 rotate to the lateral wall 1b side of the tray 1.

However, before the selector engaging parts 11 and 15 rotate up to the limit of rotation, the both chamfered parts of the rear wall 204 abut against the slider 2 and/or 6 (in the example in Fig. 14, abutting only against bent part 2b of the slider 2 or its vicinity), the slider 2 and/or 6 (in the example in Fig. 14, only the slider 2) slides in the loading direction Y1. At this time, the selector engaging parts 11 and 15 are insufficient in amount of rotation, rotating only to the first stopping positions 12 and 16 from the initial position, and the sliders 2 and 6 stop at the first stopping position.

In this case, therefore, the second cartridge 201 is stopped in a state projecting from the front wall 1a of the tray 1, and the user notices wrong mounting of the second cartridge 201. If the user is not aware of wrong mounting, when the slider 2 stops at the first stopping position, the detection switch 1g remains in OFF position, and the tray loading mechanism of the main body of recording/reproducing apparatus is not put in action, and the recording/reproducing apparatus does not load the second cartridge 201 in the main body of recording/reproducing apparatus. As a result, problems of wrong loading of second cartridge 201 into the main body of recording/reproducing apparatus and inability of discharge of the wrong loaded second cartridge 201 can be solved.

Fig. 15 shows the second cartridge 201 mounted in a wrong direction at 90° deviated from the specified mounting direction (that is, sideways), so that its lateral part (lateral wall 205) having the shutter opening 207 is directed in the loading direction Y1. Also in this case, the straight part of the lateral wall 206 of the loading direction Y1 side presses the selectors 4 and 8, but before rotating up to the limit of rotation, the chamfered angles between the lateral wall 206 and front wall 203 abut against the bent part 2b of the slider 2 or its vicinity, and the chamfered angles between the lateral wall 206 and rear wall 204 abut against the bent part 6b of the slider 6 or its vicinity, and hence the selector engaging parts 11 and 15 can rotate up to the first stopping positions 12 and 16 only, and the sliders 2 and 6 can slide only up to the first stopping positions 12 and 16 in the loading direction Y1, and hence the second cartridge 201 projects from the front wall 1a of the tray 1, and the detection switch 1g does not operate.

Depending on the mounting direction of the second cartridge 201 on the tray 1, specified mounting direction or wrong mounting direction can be detected accurately. In the tray 1 explained in the preferred embodiment, the selectors 4 and 8 are provided with a pair of sliders 2 and 6, but if one slider has a selector and other slider does not have selector, it is the same in principle and effect of detection of wrong mounting of second cartridge 201.

Fig. 16 is a plan view showing an intermediate process of mounting the second cartridge 201 from the direction of the lateral wall 1b of the tray 1 (that is, from an oblique direction), with the couphng portion of the front wall 203 and lateral wall 205 at the front side.

Also in this case, the coupling portion abuts against the selector 8, and the selector engaging part 15 rotates up to the vicinity of the wall 21a facing the second stopping position 17, but since the bent part 2b of the slider 2 abuts against the selector 4 and lateral wall 205, the selector engaging part 11 is positioned at the wall 19a facing the unloading direction Y2 in a range of the first engaging position 12. As a result, wrong mounting of the second cartridge 201 from oblique direction is prevented.

If the mounting direction of the second cartridge 201 is an oblique direction to the loading direction Y1 or unloading direction Y2, since the tray 1 is provided with a pair of sliders 2 and 6, wrong mounting can be detected securely, whether in a right oblique direction or in a left oblique direction of the tray 1.

Thus, when the tray 1 of the preferred embodiment is applied in a recording/reproducing apparatus, wrong mounting of the first cartridge 101 and wrong mounting of the second cartridge 201 can be both prevented. In particular, for the purpose of enhancing the quality as recording/reproducing apparatus, as shown in Fig. 1, if the height of the front wall 1a and lateral wall 1b is set low from the cartridge platform 1f, wrong mounting of the first cartridge 101 and second cartridge 201 can be prevented effectively in the tray 1 of the preferred embodiment.

In the event of wrong mounting by placing upside down, in the case of the first cartridge 101 and second cartridge 201 shown in this preferred embodiment, if it is a one-side cartridge that can be recorded and reproduced in one side only (the side contacting with the cartridge platform 1f), the first cartridge 101 has side judging recesses (not shown), and the second cartridge 201 also has side judging recesses 205a and 206a, and by engagement of the judging recesses (in the second cartridge 201, the recesses 205a and 206a) with the positioning bump 1c, wrong mounting can be prevented.

On the other hand, if both the first cartridge 101 and second cartridge 201 are both·side recording and reproducing type, it is not required to distinguish the sides, and the cartridge for both-side recording and reproducing type has a symmetrical outer shape, and the wrong mounting preventive mechanism of the preferred embodiment operates in the same manner.

Further, if cartridge detecting means such as the detection switch 1g or 1h is provided as an independent structure depending on the outer shape of the cartridge, in the case the first cartridge 101 and second cartridge 201 are different in light source, different in linear speed of the contained information recording media, different in the signal recording system, or different in the compression efficiency due to difference in capacity of information recording media, the user can handle as easily as ever.

In the explanation herein, the first cartridge 101 is rectangular in plan view, and opening and closing action of the shutter 105 is achieved by engagement of the shutter opening means 18 from the shorter side having the shutter 105. Hence, in order to prevent interference of the lateral side of the slider 6 with the shutter opening means 18 when opening the shutter opening means 18, the bent part 6b of the slider 6 provided at the side facing the cartridge is located at a position relatively closer to the lateral wall 1b, and in this respect it is slightly different from the shape of the slider 2.

However, if the opening/closing means of the shutter 105 of the first cartridge 101 is provided at the lateral wall 207, for example, as in the case of the second cartridge 201, the slider 6 can be formed in the same shape as the slider 2, and manufacture of sliders 2 and 6 and management of parts can be enhanced in efficiency.

In the case of the tray 1 shown in Fig. 1, the stopping positions of the sliders 2 and 6 are only two, first and second, and they are actually for the second cartridge only. In this case, the slider 2 and slider 6 are not required to be distinguished in shape, but may be formed in same shape. In the tray exclusive for the second cartridge, by forming the sliders 2 and 6 in different shapes, they can be used commonly for the first cartridge and second cartridge as shown in Fig. 8, or the slider 2 and slider 6 can be used commonly for the second cartridge only as shown in Fig. 1.

In the foregoing explanation, the shape of the second cartridge 201 is almost square in plan view, but it may be formed in an almost rectangular shape in plan view same as the first cartridge 101, or the shutter engaging shorter side may be formed like an arch or triangle, and even in this case, specified mounting from the front wall 203 and wrong mounting from the rear wall 204 can be judged exactly in the same manner. In this case, mounting from the sideways direction can be easily detected as wrong mounting by the user by the same reason as in the first cartridge 101.

As explained above, the shorter side 102 to be engaged with the shutter 105 of the first cartridge 101 is in straight shape, but if it is formed like the front edge 203 of the second cartridge 201, wrong mounting of the first cartridge 101 and second cartridge 201 can be prevented in the same constitution as in the foregoing preferred embodiments. It is also possible to detect the type of the cartridge having the detection switches 1g and 1h.

In the above explanation, the front edge of the second cartridge 201 is curved like an arch, or it may be also formed in a triangle or other shape projecting from the cartridge main body, or in the case of the second cartridge in front edge arch shape and triangular shape, it is applicable only by slight changes of the angle of rotation of the selector in the slider and/or stopping position of the positioning mechanism.

Further, the selectors 4 and 8 of the sliders 2 and 6 may be provided with extensions extending inward into the tray 1.

In the case of BD cartridge, as known well, a relatively thick shutter opening mechanism may be provided at the lower side, and in the thickness direction, the lower portion is set relatively thicker than the information recording media contained inside. Accordingly, if the so-called BD cartridge is applied as second cartridge 201, when used in a recording/reproducing apparatus, mechanical parts such as optical pickup and turntable must be inserted relatively higher than the tray, and the tray opening must be wide wider accordingly.

Hence, as shown in Fig. 24, when a small disk D2 (a bare disk having a nominal diameter of 8 cm) is mounted on a small disk platform 1e as a so-called cartridge-free bare disk, it may drop out of the tray opening 1H set in a relatively wide size depending on the circumstance.

Accordingly, as shown in Figs. 25 and 26, the selectors 4 and 8 of the sliders 2 and 6 are provided with extensions 4j and 8j extending by a specified length in an inward direction of the tray 1, and when the sliders 2 and 6 are at the initial position, leading ends 4k and 8k of the extensions 4j and 8j are positioned closer to the peripheral edge of the large disk platform 1d. Thereby, the outer periphery of the large disk D1 (a bare disk having a nominal diameter of 12 cm) can be effectively guided when it is mounted on the large disk platform 1d, and the mounting work of the large disk D1 can be perform more easily. Also, when the small disk D2 is mounted on the small disk platform 1e, a certain forward move of the small disk D2 is limited, and the disk D2 is prevented effectively from dropping out of the tray opening 1H.

In the above described embodiments, the selector is constituted to rotate in a plane parallel to the cartridge mounting surface of the tray. However, any type of the selector capable of detecting the outer shape of the cartridge and regulating the moving amount of the slider moving mechanism may be applicable to the tray in the present invention. For example, the first stopping position, the second stopping position and the third stopping position are provided respectively in a direction perpendicular to the cartridge mounting surface of the tray, and the selector may be constituted to move in the perpendicular (vertical) direction when the engaging portion of the selector engages with the outer periphery (outer shape) of the cartridge. In other words, the moving direction of the selector may be determined optionally, under the condition that the selector's opposite part to the cartridge moves in the loading direction more (farther) than the slider's opposite surface to the cartridge when the slider moves from the initial position to any one of the first, the second and the third stopping position.

Thus, according to the invention, even in the case of a cartridge of an almost square shape in outer shape, having a front side extending like an arch, a rear side facing the front side with both angles chamfered, and a pair of lateral sides coupling the rear side and front side, the user can easily detects whether mounting direction on the tray is specified direction or wrong direction. Therefore, it is effective to prevent troubles after loading of cartridge into a recording/reproducing apparatus main body, such as failure of recording or reproducing due to wrong mounting or inability of discharge of cartridge once loaded inside.

The invention can be applied in a tray for mounting a cartridge containing an information recording medium for video, music, computer data or the like, and a recording/reproducing apparatus having such a tray, and wrong mounting of cartridge on tray can be prevented effectively.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A tray for mounting a cartridge incorporating a flat information recording medium on a tray base, comprising:
a slider moving in a loading direction of the cartridge on the tray base in cooperation with the mounting action of the cartridge on the tray base; and
a slider moving mechanism for moving the slider between an initial position where the cartridge is not mounted, and a plurality of stopping positions remote from the initial position by specific distances in the loading direction, wherein
the plurality of stopping positions include at least two stopping positions, that is, a first stopping position remote from the initial position by a first distance in the loading direction, and a second stopping position remote from the initial position by a second distance longer than the first distance in the loading direction.

2. The tray of claim 1, wherein
the plurality of stopping positions further include a third stopping position remote from the initial position by a third distance longer than the second distance in the loading direction.

3. The tray of claim 1 or 2, further comprising:
a slider biasing mechanism for returning the slider from any one of the plurality of stopping position to the initial position.

4. The tray of any of claims 1 to 3, wherein
the slider includes a selector for selecting the stopping position at which the slider stops after moving in the loading direction from the plurality of stopping positions.

5. The tray of claim 4, further comprising:
a selector biasing mechanism for returning the selector to an initial state when the slider returns from any one of the plurality of stopping positions to the initial position.

6. The tray of claim 5, wherein
the biasing force of the slider biasing mechanism is set larger than the biasing force of the selector biasing mechanism.

7. The tray of any of claims 2 to 6, wherein
the slider includes a bent part bending in the loading direction from a slider's opposite surface to the cartridge.

8. The tray of any of claims 2 to 7, wherein
the slider moves from the initial position to the third stopping position when the slider is pressed in the loading direction.

9. The tray of any of claims 4 to 7, wherein
the slider moves from the initial position to the second stopping position when the selector of the slider is pressed in the loading direction.

10. The tray of any of claims 4 to 9, wherein
the selector of the slider is provided with a selector's opposite part to the cartridge,
the selector's opposite part to the cartridge moves in the loading direction more than the slider's opposite surface to the cartridge when the slider moves in the loading direction.

11. The tray of any of claims 4 to 10, wherein
the tray base further includes a large disk platform for mounting a disk of large diameter,
the selector has an extension extending in the inward direction of the tray base, and
the leading end of the extension is located in the vicinity of the peripheral edge of the large disk platform when the slider is at the initial position.

12. The tray of any of claims 4 to 11, wherein
the tray is capable of mounting a cartridge of an almost square shape in an outer shape of a principal plane substantially parallel to an information recording medium contained inside, having a front side extending like an arch, a straight rear side opposing to the front side with both angles chamfered, and a pair of lateral sides coupling the rear side and front side, and
the slider moves from the initial position to the second stopping position when the front side presses the selector in the loading direction along with mounting action of the cartridge on the tray base.

13. The tray of claim 12, wherein
the both chamfered angles of the rear side abut against the selector when the cartridge is mounted on the tray in a state that the rear part thereof directs to the loading direction, and the selector selects the first stopping position so that the slider is stopped at the first stopping position.

14. The tray of claim 12 or 13, wherein
either the corner consecutive from the lateral side to the front side or the chamfered angle consecutive from the lateral side to the rear side abuts against the selector when the cartridge is mounted on the tray in a state that either one of the pair of lateral sides thereof directs to the loading direction, and the selector selects the first stopping position so that the slider is stopped at the first stopping position.

15. The tray of any one of claims 4 to 11, wherein
the tray is capable of mounting selectively either a first cartridge of an almost rectangular shape in an outer shape of a principal plane substantially parallel to an information recording medium contained inside, or a second cartridge of an almost square shape in an outer shape of a principal plane substantially parallel to an information recording medium contained inside, having a front side extending like an arch, a straight rear side facing the front side with both angles chamfered, and a pair of lateral sides coupling the rear side and front side,
the first cartridge presses the slider in the loading direction along with mounting action on the tray base, and the slider moves from the initial position to the third stopping position, and
the second cartridge causes its front end to press the selector in the loading direction along with mounting action on the tray base, and the slider moves from the initial position to the second stopping position.

16. The tray of claim 15, wherein
the both chamfered angles of the rear side abut against the selector when the second cartridge is mounted on the tray in a state that the rear part thereof directs to the loading direction, and the selector selects the first stopping position, so that the slider is stopped at the first stopping position.

17. The tray of claim 15 or 16, wherein
either the corner consecutive from the lateral side to the front side or the chamfered angle consecutive from the lateral side to the rear side abuts against the selector when the cartridge is mounted on the tray in a state that either one of the pair of lateral sides thereof directs to the loading direction, and the selector selects the first stopping position so that the slider is stopped at the first stopping position.

18. A recording/reproducing apparatus comprising:
a recording/reproducing device including an optical head for receiving an information signal optically from an information layer of an information recording medium, and a rotating mechanism for rotating the information recording medium;
a tray of any of claims 1 to 17 for mounting a cartridge containing the information recording medium in its inside, and having a window provided in a principal plane substantially parallel to the information recording medium for inserting the optical head and rotating mechanism, and a shutter for opening/closing the window; and
a conveying device for conveying the tray back and forth between a detaching/attaching position for detaching/attaching the cartridge, and a recording/reproducing position corresponding to the recording/reproducing device.
